# EUROPÄISCHE PATENTSCHRIFT

(11) **EP 1 374 328 B1**
(45) Veröffentlichungstag und Bekanntmachung des Hinweises auf die Patenterteilung: **20.10.2004**
(21) Anmeldenummer: 02732341.9
(22) Anmeldetag: 22.03.2002
(51) Int. Cl.: H01M 8/02, H01M 8/24

(54) **ENDPLATTENANORDNUNG EINER ELEKTROCHEMISCHEN ZELLE DER POLYMERELEKTROLYTMEMBRANBAUART**
END-PLATE ASSEMBLY OF AN ELECTROCHEMICAL CELL WITH A POLYMER ELECTROLYTE MEMBRANE CONSTRUCTION
ENSEMBLE PLAQUE TERMINALE D'UNE CELLULE ELECTROCHIMIQUE DU TYPE A MEMBRANE ELECTROLYTE POLYMERE

(30) Priorität: 24.03.2001 EP 01107354
(43) Veröffentlichungstag der Anmeldung: 02.01.2004
(73) Patentinhaber: H-TEC Wasserstoff-Energie-Systeme GmbH, 23558 Lübeck (DE)
(72) Erfinder: Höller, Stefan, 23552 Lübeck (DE); Küter, Uwe, 23564 Lübeck (DE)
(74) Vertreter: Vollmann, Heiko, Dipl.-Ing.
(86) Internationale Anmeldenummer: PCT/DE2002/001060
(87) Internationale Veröffentlichungsnummer: WO 2002/078107

(56) Entgegenhaltungen:
- WO-A-94/14204
- US-A- 5 009 968
- US-A- 5 547 777

## Beschreibung

Die Erfindung betrifft eine Endplattenanordnung einer elektrochemischen Zelle der Polymerelektrolytmembranbauart, insbesondere eines Zellstapels mit insbesondere randseitiger Verspannung zwischen zwei Endplatten.

Elektrochemische Zellen der Polymerelektrolytmembranbauart sind bekannt und beispielsweise in DE 195 44 323 A1 beschrieben. Solche Zellen können entweder als Brennstoffzelle, d.h. zur Stromerzeugung aus Brennstoff und Sauerstoff oder aber als Elektrolyseur eingesetzt werden, um unter Einsatz von Strom Wasserstoff und Sauerstoff aus Wasser zu erzeugen. In der praktischen Anwendung werden in der Regel eine Vielzahl elektrochemischer Zellen in Stapelanordnung eingesetzt, so wie dies beispielsweise aus WO 99/28985 und dort insbesondere aus Figur 1 bekannt ist. Dabei ist man stets bestrebt, den Aufbau möglichst kompakt zu gestalten, um eine hohe Energiedichte bei geringer Baugröße und möglichst geringem Gewichtzu erreichen. Ein weiteres Ziel ist stets den Herstellungspreis zu senken.

Eine elektrochemische Zelle besteht im Wesentlichen aus einer Polymerelektrolytmembran, d.h. einer ionendurchlässigen Folie, die beidseitig von einer Gasdiffusionselektrode abgedeckt ist, die die katalytisch wirksame Schicht an die Membran bringt. Die Gasdiffusionsetektroden sind jeweils mit einer bipolaren Platte abgedeckt, über welche die Brennstoff- bzw. Sauerstoffzufuhr bzw. -abfuhr erfolgt. An eine solche bipolare Platte schließt sich an der anderen Seite wiederum eine Gasdiffusionselektrode mit Polymerelektrolytmembran an usw.. An beiden Enden eines solchen Stapels von elektrochemischen Zellen ist üblicherweise jeweils eine Endplatte vorgesehen, über welche die elektrische Leistung zu- bzw.. abgeführt und über die Druckkräfte in den Zellenstapel eingeleitet werden, welche zum wirksamen Betrieb desselben erforderlich sind. Hierzu weisen die Endplatten randseitig üblicherweise Ausnehmungen auf, durch welche Zuganker geführt sind, die die beiden Endplatten unter Einschluss des dazwischenliegenden Zellenstapels verspannen. Damit der Anpressdruck innerhalb der Zellen über die Fläche möglichst konstant ist, ist es erforderlich, diese Zugkräfte möglichst gleichmäßig über die Fläche in den Stapel einzubringen. Aus-diesem Grunde werden die Endplatten regelmäßig aus massivem Metall gefertigt, um eine möglichst geringe Durchbiegung über die Fläche und damit einen gleichmäßigen Anpressdruck zu erreichen. So sind Endplatten bekannter Zellenstapel mit Flächen von beispielsweise 20 cm² typischerweise 1 cm dick. Solche Endplatten erhöhen die Höhe des Zellenstapels, sie sind schwer und im Übrigen auch kostenintensiv in der Herstellung.

Um eine Vergleichmäßigung des Anpressdruckes und somit auch eine Verringerung der Endplattendicke zu erreichen, ist es bereits bekannt, eine elastische Ausgleichsschicht zwischen Endplatte und Zellenstapel vorzusehen (US-PS 5,547,777). Diese bekannte elastische Ausgleichsschicht löst das vorgenannte Problem jedoch nur unzureichend. Insofern günstiger ist die aus DE 100 03 528 A1 bekannte Lösung, bei der eine Flüssigkeit die Ausgleichsschicht bildet. Hier wird der Anpressdruck völlig gleichmäßig über die Fläche verteilt. Nachteilig ist jedoch der hohe Bauaufwand und insbesondere der Montagaufwand, da die Flüssigkeit erst eingefüllt werden kann, nachdem die Anordnung fertig montiert und die die Flüssigkeit aufnehmende Kammer hermetisch abgedichtet ist.

Vor diesem Hintergrund liegt der Erfindung die Aufgabe zu Grunde, eine gattungsgemäße Endplattenanordnung dahingehend zu verbessern, dass die Anpressdruckverfeilung über die Fläche vergleichsmäßigt, jedoch der Bauaufwand, insbesondere Montageaufwand verringert wird.

Diese Aufgabe wird gemäß der Erfindung durch die in Anspruch 1 angegebenen Merkmale gelöst. Vorteilhafte Ausgestaltungen der Erfindung sind in den Unteransprüchen der nachfolgenden Beschreibung sowie der Zeichnung angegeben.

Grundgedanke der vorliegenden Erfindung ist es, eine Ausgleichsschicht vorzusehen, welche die günstigen Druckverteilungseigenschaften einer Flüssigkeit aufweist, jedoch den Bauaufwand dadurch zu reduzieren, dass bei Einbringen dieser Ausgleichsschicht vorzugsweise ein fester, zumindest pastöser Stoff zu handhaben ist, also keine besonderen Maßnahmen zum Abdichten gegenüber einer Flüssigkeit zu treffen sind. Demgemäß sieht die Erfindung als Ausgleichsstoff einen unter Druck fließfähigen Stoff vor. Unter unter Druck fließfähiger Stoff im Sinne der Erfindung zu verstehen ist ein Stoff, der bei der Montage fest oder pastös ist, der jedoch nach Aufbringen der Spannk:raft zwischen den Endplatten sich aufgrund des dann herrschenden Drucks im Hinblick auf die Druckverteilung im Wesentlichen wie eine Flüssigkeit verhält, d.h., den Druck gleichmäßig über die angrenzenden Flächen, insbesondere auch über die zum Zellstapel gerichtete Anpressfläche verteilt.

Ein unter Druck fließfähiger Stoff kann beispielsweise ein Klebstofffilm zwischen der elektrisch leitenden Schicht und der Endplatte sein, der ab einem bestimmten Druck Fließeigenschaft aufweist, so dass die gewünschte nivellierende Wirkung mit zunehmender Krafteinleitung bei der Montage des Stacks, insbesondere beim Anzug der Zuganker erfolgt.

Die Erfindung vereint somit die Vorteile einer flüssigen Ausgleichsschicht mit denen einer festen Ausgleichsschicht. Vorteilhaft wird als Ausgleichsschicht ein Klebstofffilm eingesetzt, der aufgrund der klebenden Eigenschaften nicht nur besonders gut zwischen Endplatte und elektrisch leitender Schicht fixierbar ist, sondem darüber hinaus noch den Vorteil hat, dass er während der Montage die elektrisch leitende Schicht an der Endplatte fixiert. Alternativ kann auch ein pastöser Stoff eingesetzt werden, beispielsweise Silikon. Es spielt dabei keine Rolle, wenn das Silikon, wie es beispielsweise bei üblichen Dichtstoffen auf Silikonbasis der Fall ist, während der Montage oberflächlich antrocknet bzw. aushärtet. Dieser Vorgang darf allerdings nur soweit eintreten, als dass die Fließfähigkeit unter Druck noch gewährleistet ist.

Die Ausgleichsschicht kann auch durch eine aushärtende Schicht, beispielsweise eine Silikonschicht, einen Lack oder ein Mehrkomponenten- Epoxidharz gebildet sein, wobei die Aushärteparameter so gewählt werden sollten, dass die Aushärtung der gesamten Ausgleichsschicht erst eintritt, wenn der Stapel von elektrochemischen Zellen fertig montiert und druckbeaufschlagt ist.

Bevorzugt wird die Ausgleichsschicht jedoch so gewählt, dass eine vollständige Aushärtung zumindest unter Druck nicht zustande kommt, so dass die Flüssigkeitseigenschaften zur Druckverteilung erhalten bleiben.

Beim Einsatz von pastösen Ausgleichsschichten, die hinsichtlich der Nivellierung der Krafteinleitung besonders günstig sind, ist es zweckmäßig, in der Endplatte eine Ausnehmung vorzusehen, in der diese Schicht einbringbar ist.

Dabei wird die Schicht zur einen Seite durch die Endplatte und zur anderen Seite durch die elektrisch leitende Schicht, die in der Regel durch eine Metallplatte oder Folie gebildet ist, abgedeckt und kann lediglich in schmalen Randbereichen kurzfristig aushärten. Dieses Aushärten der Randbereiche ist gewünscht, da nur so sichergestellt werden kann, dass das dann flüssige Medium beim Aufbringen der Druckkräfte nicht durch die Ranclspalten entweicht, sondern durch die bereits ausgehärteten Abschnitte gehalten wird.

Um die elektrische Funktion der Endplattenanordnung zu gewährleisten, ist die Ausgleichsschicht an der zur Zelle weisenden Seite mit einer elektrisch leitenden Schicht, die jedoch keine Tragfunktion hat, versehen. Diese elektrisch leitende Schicht weist einen von außen zugänglichen elektrischen Anschluss auf, über den die elektrische Leistung abgenommen bzw. zugeführt wird.

Die elektrisch leitende Schicht wird vorteilhaft durch eine dünne Metallplatte oder auch mit Metallfolie gebildet, vorzugsweise aus Kupfer oder einer Kupferlegierung, um eine hohe Leitfähigkeit zu erreichen. Es kann hier beispielsweise eine 0,1 bis 1 mm dicke Kupferfolie gewählt werden, wobei die Dicke der elektrisch leitenden Schicht in ganz entscheidenem Maße von elektrischen Parametern bestimmt wird.

Kupferplatten oder -folien haben zwar eine hohe Leitfähigkeit, sind jedoch verhältnismäßig korrosionsempfindlich. Es ist daherzweckmäßig, eine solche Metallplatte an der zur Zelle weisenden Seite mit einer weiteren elektrisch leilenden, jedoch korrosionsfesten Schicht zu versehen. Eine solche Schicht kann beispielsweise aus Gold bestehen.

Hinsichtlich der Korrosionsfestigkeit ausreichend, jedoch von den Kosten wesentlich günstiger als Gold, ist eine Titanschicht in Form einer Titanfolie. Eine solche Folie kann mittels eines elektrisch leitenden Klebstoffs, z.B. eines elektrisch leitenden Epoxidharzklebstoffs mit der Metallplatte verbunden werden. Als günstig hat sich hier beispielsweise ein. silberhaltiger Epoxidharzklebstoff erwiesen, mit dem die Titanfolie flächig mit der Kupferplatte verklebt werden kann.

Die elektrisch leitende Schicht wird vorzugsweise durch eine Metallfolie gebildet, die zur Verbesserung der Leiteigenschaften bzw. zum Erhalt konstanter Leiteigenschaften oberflächenbeschichtet ist, und zwar auf der zur Zelle weisenden Seite. Eine solche Metallfolie kann beispielsweise eine Nickel, Kupfer, Silber oder auch andere Folie sein. Die Beschichtung kann in Form eines Edelmetalls oder einer Edelmetalllegierung oder auch in Form von Titannitrid gebildet sein. Letzterer Stoff hat sich insoweit bewährt, als er hohe Härte und eine hohe Konstanz der Leiteigenschaften aufweist.

Um den elektrischen Anschluss zur elektrisch leitenden Schicht aus dem Zellstapel herauszuführen, ist es zweckmäßig entweder einen seitlichen Ansatz vorzusehen oder einen die Endplatte durchsetzenden Ansatz, über den ein elektrischer Anschluß zur elektrisch leitenden Schicht gebildet wird.

Um sicherzustellen, dass die elastische Schicht nach Aufbringen des Druckes nicht seitlich entweicht, muss zwischen Endplatte und elektrisch leitender Schicht bzw. dem dahinterliegenden Zellstapel ein hermetisch abgedichteter Raum gebildet sein. Dieser Raum kann seitlich beispielsweise durch einen in der Endplatte vorgesehenen, die Ausgleichsschicht umgebenden Rand gebildet sein. Wenn ein solcher Rand nicht vorgesehen ist, kann zwischen Endplatte und elektrisch leitender Schicht auch randseitig eine ringförmige Dichtung vorgesehen sein, welche diesen Raum begrenzt. Eine solche Dichtung kann beispielsweise in Form eines einfachen O-Rings oder auch einer gestanzten Dichtung aus Gummi oder anderen geeigneten Werkstoff gebildet sein.

Aufgrund der guten Druckverteilung von der Endplatte auf den Zellstapel kann gemäß der Erfindung die Endplatte im Vergleich zum Stand der Technik weniger eigensteif und damit leichter konstruiert sein. Es können beispielsweise Endplatten eingesetzt werden, die durch Kunststoffspritzgussteile gebildet sind und welche die randseitigen Ausnehmungen für die Zuganker bereits aufweisen, so dass eine Nachbearbeitung der Endplatten entbehrlich ist.

Die Kontaktierung der metallisch leitenden Schicht kann zwar grundsätzlich wahlweise von der Seite oder rückwärtig durch die Endplatte hindurch erfolgen, besonders günstig ist jedoch die rückwärtige Kontaktierung, da hierbei im Wesentlichen eine zentrale Kontaktierung von der Mitte der Fläche her erfolgen kann, bei der aufgrund der Stromflußverteifung in alle Richtungen die Dimensionierung der Schichtdicke geringer erfolgen kann. Die Endplatte, die bevorzugt als Kunststoffspritzgussteil hergestellt ist, weist in den Randbereichen Ausnehmungen für die Zuganker auf sowie, falls eine zentrale Stromdurchführung erfolgen soll, auch eine Ausnehmung zur Kontaktierung der Metallplatte.

Die Dimensionierung der Kunststoffplatte muss so erfolgen, dass sie die Kraft der Zuganker sicher aufnehmen und auf den Zellenstapel übertragen kann, eine gewisse elastische Verformung ist hier jedoch tolerierbar, da diese durch die Ausgleichsschicht kompensiert wird.

Die erfindungsgemäße Lösung ist nicht nur wie vorstehend beschrieben für Endplattenanordnungen in Verbindung mit Zellstapein anwendbar, sondern kann auch bei einer Einzelzelle oder auch einem lediglich aus zwei Zellen bestehenden Zellstapel vorteilhaft eingesetzt werden. Insbesondere bei einem aus zwei oder wenig mehr Zellen bestehenden Zellstapel kann die erfindungsgemäße Druckausgleichsschicht auch zwischen den Zellen angeordnet werden, so dass sich die benachbarten Zellen in ihrer Form den durch die Zugkräfte gewölbten Endplatten anpassen, wobei die Druckverteilung über die Fläche aufgrund der Druckausgleichsschicht zwischen den Zellen völlig gleichmäßig ist.

Die Erfindung ist nachfolgend anhand der in der Zeichnung dargestellten Ausführungsbeispiele erläutert. Es zeigen :
- Fig. 1: eine Ansicht auf eine Endplattenanordnung von der Zelle aus,
- Fig. 2: einen Schnitt, längs der Schnittlinie 11-11 in Figur 1,
- Fig. 3: eine Ansicht auf die Rückseite der Endplattenanordnung,
- Fig. 4: in schematischer Schnittdarstellung eine Endplatte mit Ausgleichsschicht kraftfrei,
- Fig. 5: die gleiche Anordnung nach Kraftbeaufschlagung,
- Fig. 6: in vergrößerter Darstellung einen Schnitt gemäß Fig. 2 einer anderen Ausführungsvariante.

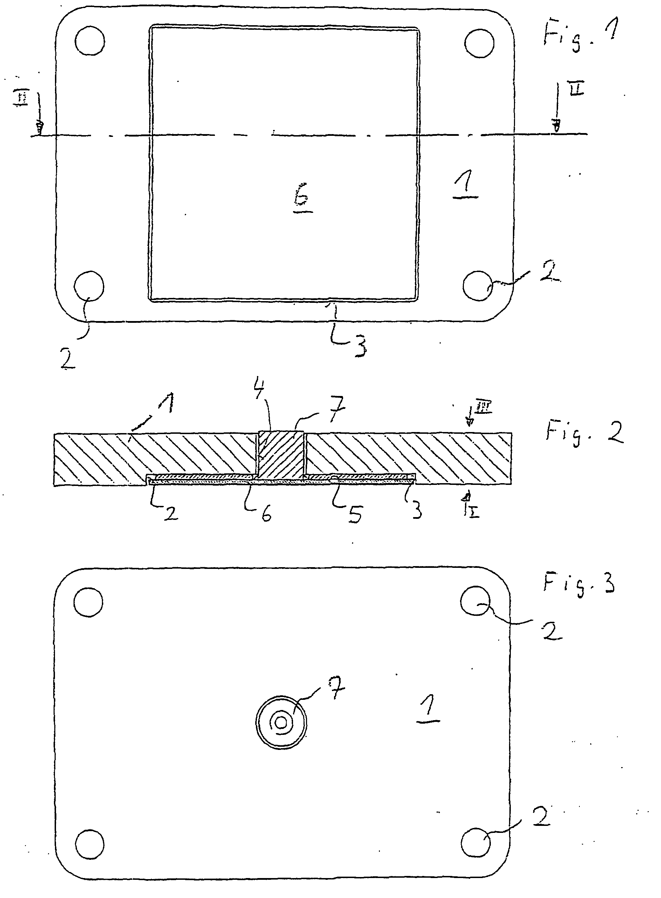

Die anhand der Figuren 1 bis 3 dargestellte Endplattenanordnung wird paarweise eingesetzt und schließt ein oder zweckmäßigerweise mehrere hintereinander angeordnete elektrochemische Zellen der Polymerelektrolytmembranbauart, wie sie beispielsweise in DE 195 44 323 A1 beschrieben sind ein. Der Aufbau eines solchen Zellenstapels ist dort insbesondere anhand von Figur 1 beschrieben, auf die hiermit verwiesen wird. Eine Endplattenanordnung weist eine Endplatte 1 in rechteckiger Form auf, welche den Zellenstapel an allen vier Seiten überragt. Die Endplatte 1 ist als Kunststoffspritzgussteil ausgebildet, weist vier durchsetzende Ausnehmungen 2 in den Eckbereichen auf sowie eine flache quadratische Ausnehmung 3 in der zur Zelle hin gerichteten Seite. Diese flache Ausnehmung 3 bildet über die Fläche eine Vertiefung und ist lediglich im zentralen Bereich in der Mitte der Platte 1 durchgängig. Dieser Bereich ist mit 4 gekennzeichnet. Die Ausnehmung 3 ist flächenmäßig entsprechend der Größe der darunter liegenden Zelle dimensioniert.

In der Ausnehmung 3 liegt an der Endplatte 1 unmittelbar anliegend eine Ausgleichsschicht 5 in Form eines elastischen Klebstofffilms sowie eine diese abdeckende Metallplatte 6. Die Metallplatte 6 liegt mit geringem seitlichem Spiel in der Ausnehmung, wohingegen die Ausgleichsschicht 5 ein deutliches Spiel zum Rand der Ausnehmung 3 hin aufweist, wie dies aus Figur 2 auch hervorgeht. Hierdurch ist ein Freiraum gebildet, der dazu dient, dass bei Kraftbeaufschlagung das Material der Ausgleichsschicht 5 seitlich ausweichen kann.

Die Metallplatte 6 ist rückseitig mit einem zylindrischen Ansatz 7 versehen, der fest und leitend mit dieser verbunden ist, durch die Ausgleichsschicht 5 sowie durch die zentrale Ausnehmung 4 in der Endplatte 1 hindurchgeführt ist, so dass über diesen zylindrischen Ansatz 7 die Metallplatte 6 elektrisch kontaktierbar ist.

Die Metallplatte 6 besteht aus Kupfer und ist an ihrer zur Zelle weisenden Seite 1 mit einer Titanfolie belegt. Titanfolie ist mittels eines elektrisch leitenden Klebstoffs mit der Kupferplatte verbunden.

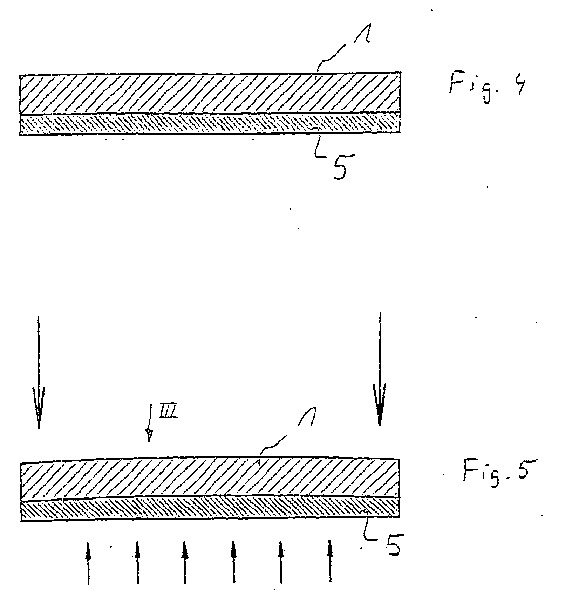

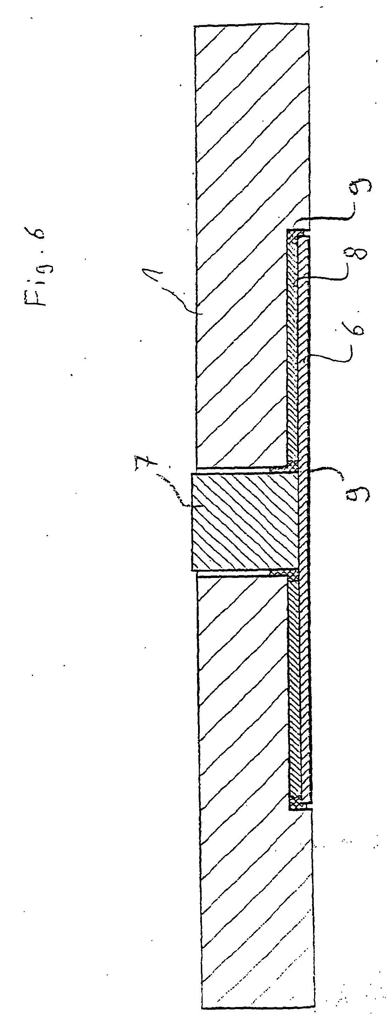

In unbelastetem Zustand ist die Endplatte 1 im Bereich der Ausnehmung 3 planparallel ausgebildet (sie weist zumindest an ihrer zur Zelle weisenden Seite eine plane Fläche auf), genauso wie die daran anliegende Ausgleichsschicht 5 (siehe Fig. 4). Im Belastungsfall, wenn ein Zellstapel zwischen zwei Endplattenanordnungen gemäß der vorbeschriebenen Art eingespannt ist und Zuganker durch die Ausnehmungen 2 geführt sind, wird mittels der Zuganker eine Druckkraft bei Brennstoffzellen zwischen 50 und 200 N/cm² und bei Elektrolyseuren zwischen 1000 und 4000 N/cm² aufgebracht. Diese Kraft wird im Bereich der Ausnehmungen 2 von der Rückseite III der Endplatten 1 eingeleitet, so dass sich die Endplatte 1, wie in Figur 5 dargestellt, verformt. Durch den Gegendruck des Zellstapels wird die Endplatte 1 über diesen hinweg gekrümmt, so dass die nach außen weisende Seite III leicht konvex und die Innenseite, an der die Ausgleichsschicht 5 anliegt, leicht konkav verformt ist.

Um zu verhindern, dass entsprechend dieser Verformung eine ungleichmäßige Krafteinleitung in den darunter liegenden Zellstapel erfolgt, ist die Ausgleichsschicht 5 vorgesehen, die entsprechend der ungleichmäßigen Krafteinleitung über die Endplatte 1 in den seitlichen Bereichen dünner als in der Mitte wird. Im Idealfall, der sich insbesondere dann einstellt, wenn die Ausgleichsschicht 5 hydraulische Eigenschaften aufweist, wird die ungleichmäßige Krafteinleitung durch die Endplatte 1 mittels der Ausgleichsschicht 5 vollständig ausgeglichen.

Die hydraulischen Eigenschaften erhält die Ausgleichsschicht 5 durch die über die Zuganker aufgebrachten Druckkräfte, weiche einen solchen Druck auch auf diese Ausgleichsschicht 5 aufbringen, dass diese fließfähig wird.

Die in Figur 6 dargestellte Endplattenanordnung weist die gleiche Endplatte 1 wie vorbeschrieben auf, auch ist die Metallplatte 6 ist in gleicher Weise ausgebildet. Im Unterschied zu der vorbeschriebenen Ausführungsvariante ist jedoch eine Ausgleichsschicht 8 aus selbstaushärtendem Silikon vorgesehen.

Diese Ausgleichsschicht 8 wird in die Ausnehmung 3 der Endplatte 1 eingebracht, wonach die Metallplatte 6 mit ihrem zylindrischen Ansatz 7 eingelegt wird. In dieser vormontierten Stellung verbleibt das Bauteil eine gewisse Zeit, bis sich in den Randbereichen zwischen der zentralen Ausnehmung 4 und dem Ansatz 7 sowie seitlich zwischen Metallplatte 6 und Ausnehmung 3 ein ausgehärteter Bereich 9 einstellt. Diese Bereiche 9 sind immer noch hoch elastisch, jedoch so weit ausgehärtet, dass bei weiterer Krafteinleitung sichergestellt ist, dass das noch nicht ausgehärtete und unter Druck flüssige Medium 8 nicht über die Randspalten entweichen kann. Es ist ersichtlich, dass eine solche Anordnung besonders günstig ist, da die Ausgleichsschicht hydraulische Eigenschaften hat, so dass eine besonders gleichmäßige Kraftverteilung über die Fläche erfolgt. Wenn dann der Zellenstapel montiert ist und die Zuganker angezogen sind, wird über längere Zeit, zum Beispiel im Betrieb, die Ausgleichsschicht 8 vollständig aushärten, was jedoch unproblematisch ist, da sich das Kräftegleichgewicht bereits eingestellt hat und die verbleibende Restelastizität dieser Schicht ausreicht, um etwaige Spannungsspitzen, die sich durch thermische Einflüsse einstellen können, zu kompensieren.

Bei der in den vorstehenden Ausführungen mit 6 bezeichneten und beschriebenen Metallschicht handelt es sich um eine dünne Folie, die selbst keine tragende Eigenschaft aufweisen muss, da sie vom Zellstapel ganzflächig abgestützt wird.

Wie vorstehenden Ausführungen verdeutlichen, kommt es für die Eigenschaft der Ausgleichsschicht, dass sie nämlich unter Druck fließfähig und somit hydraulische Eigenschaften aufweist, wesentlich auf den Zeitpunkt der Druckaufbringung an, also unmittelbar nach der Montage und nach Einleitung der Druckkräfte über die Zuganker auf. Zwar ist es durchaus günstig, wenn diese hydraulischen Eigenschaften auch über eine lange Zeit erhalten bleiben, doch haben praktische Versuche gezeigt, dass es ausreicht, diese Ausgleichsschicht unmittelbar nach der Montage, also nach Aufbringung der Spannkräfte durch die Zuganker auszugleichen. Eine spätere Aushärtung schadet hierbei in der Regel nicht, wenn eine gewisse Grundelastizität erhalten bleibt.

### Bezugszeichenliste

- 1 -: Endplatte
- 2 -: Ausnehmungen am Rand
- 3 -: Ausnehmung flach
- 4 -: zentrale Ausnehmung
- 5 -: Ausgleichsschicht
- 6 -: Metallplatte
- 7 -: zylindrischer Ansatz
- 8 -: Ausgleichsschicht
- 9 -: ausgehärteter Bereich

## Patentansprüche

1. Endplattenanordnung einer elektrochemische Zelle der Polymerelektrolytmembranbauart, insbesondere eines Zellstapels, mit Verspannung zwischen zwei Endplatten mit folgenden Merkmalen:
- es ist eine aus Kunststoff oder Metall bestehende Endplatte (1) vorgesehen, über die die Druckkräfte in die Zelle bzw. den Zellstapel eingeleitet werden,
- auf der zur Zelle weisenden Seite der Endplatte (1) ist eine elektrisch leitende Schicht (6) vorgesehen, die mit einem von außen zugänglichen elektrischen Anschluss (7) verbunden ist,
- zwischen Endplatte (1) und der elektrisch leitenden Schicht(6) ist eine Ausgleichsschicht (5;8) vorgesehen, welche die Krafteinleitung in die Zelle bzw. den Zellstapel über die Fläche nivelliert,
- die Ausgleichsschicht ist durch einen unter Druck fließfähigen Stoff gebildet.

2. Endplattenanordnung nach Anspruch 1, **dadurch gekennzeichnet, dass** die Ausgleichsschicht durch eine Paste oder einen Klebstofffilm gebildet ist.

3. Endplattenanordnung nach einem der vorhergehenden Ansprüche, **dadurch gekennzeichnet, dass** die Ausgleichsschicht durch eine aushärtende Silikonschicht (8) gebildet ist.

4. Endplattenanordnung nach einem der vorhergehenden Ansprüche, **dadurch gekennzeichnet, dass** die elektrisch leitende Schicht durch eine vorzugsweise oberflächenbeschichtete Metallfolie gebildet ist.

5. Endplattenanordnung nach einem dervorhergehenden Ansprüche, **dadurch gekennzeichnet, dass** die Metallfolie an der zur Zelle weisenden Seite mit einer elektrisch leitenden und korrosionsfesten vorzugsweise aus Gold bestehenden Schicht versehen ist.

6. Endplattenanordnung nach einem der vorhergehenden Ansprüche, **dadurch gekennzeichnet, dass** die elektrisch leitende Schicht (6) einen die Endplatte (1) durchsetzenden oder seitlichen Ansatz (7) aufweist, der den einen elektrischen Anschluss der Zelle bzw. der Zellstapels bildet.

7. Endplattenanordnung nach einem der vorhergehenden Ansprüche, **dadurch gekennzeichnet, dass** die Endplatte (1) einen zumindest die Ausgleichsschicht (8) umgebenden Rand aufweist.

8. Endplattenanordnung nach einem der vorhergehenden Ansprüche, **dadurch gekennzeichnet, dass** die Endplatte (1) als Kunststoffspritzgussteil ausgebildet ist und randseitige Ausnehmungen (2) für Zuganker aufweist.

9. Endplattenanordnung nach einem der vorhergehenden Ansprüche, **dadurch gekennzeichnet, dass** die Ausgleichsschicht (8) randseitig von einer zwischen Endplatte (1) und elektrisch leitender Schicht (6) eingegliederten Dichtung begrenzt ist.

10. Zellstapel mit mindestens zwei elektrochemischen Zellen der Polymerelektrolymembranbauart, der zwischen zwei Endplahten eingespannt ist, und der eine Druckausgleichsschicht aufweist, **dadurch. gekennzeichnet, dass** die Druckausgleichsschicht zwischen den Zellen angeordnet durch einen unter Druck fließfähigen Stoff gebildet ist.

## Claims

1. An end-plate assembly of an electrochemical cell of the polymer electrolyte membrane construction type, in particular of a cell stack, with tensioning (clamping) between two end-plates, with the following features:
- there is provided an end-plate (1) consisting of plastic or metal, via which the pressure forces are introduced into the cell or the cell stack,
- on that side of the end-plate (1) facing the cell there is provided an electrically conductive layer (6) which is connected to an electrical connection (7) accessible from the outside,
- between the end-plate (1) and the electrically conductive layer (6) there is provided a compensation layer (5;8) which evens out the force introduction into the cell or the cell stack over the surface,
- the compensation layer is formed by a substance which is free-flowing under pressure.

2. An end-plate assembly according to claim 1, wherein the compensation layer is formed by a paste or an adhesive film.

3. An end-plate assembly according to one of the preceding claims, wherein the compensation layer is formed by a curing silicone layer (8).

4. An end-plate assembly according to one of the preceding claims, wherein the electrically conductive layer is formed by a preferably surface-coated metal foil.

5. An end-plate assembly according to one of the preceding claims, wherein the metal foil at the side facing the cell is provided with an electrically conductive and corrosion-resistant layer preferably consisting of gold.

6. An end-plate assembly according to one of the preceding claims, wherein the electrically conductive layer (6) comprises a projection (7) which is lateral or passes through the end-plate (1) and which forms the electrical connection of the cell or cell stack.

7. An end-plate assembly according to one of the preceding claims, wherein the end-plate comprises an edge surrounding at least the compensation layer (8).

8. An end-plate assembly according to one of the preceding claims, wherein the end-plate (1) is formed as a plastic injection molding part and comprises edge-side recesses (2) for tension rods (2).

9. An end-plate assembly according to one of the preceding claims, wherein the compensation layer (8) on the edge-side is limited by a seal incorporated between the end-plate (1) and the electrically conductive layer (6).

10. A cell stack with at least two electrochemical cells of the polymer electrolyte membrane construction type which is clamped between two end-plates, and which comprises a pressure compensation layer, wherein the pressure compensation layer arranged between the cells is formed by a substance free-flowing under pressure.

## Revendications

1. Ensemble à plaque terminale d'une cellule électrochimique du type à membrane électrolyte polymère, en particulier d'un empilement de cellules, avec haubanage entre deux plaques terminales et présentant les caractéristiques suivantes :
- on prévoit une plaque terminale (1), composée de plastique ou de métal et par laquelle les forces de pression sont introduites dans la cellule ou dans la pile de cellules,
- on prévoit sur le côté de la plaque terminale (1) orienté vers la cellule une couche électriquement conductrice (6) qui est reliée à une rallonge (7) électrique accessible depuis l'extérieur,
- on prévoit entre la plaque terminale (1) et la couche électriquement conductrice (6) une couche d'équilibrage (5 ; 8) qui nivelle sur la surface l'introduction de force dans la cellule ou la pile de cellules,
- la couche d'équilibrage est formée par une matière coulante sous pression.

2. Ensemble à plaque terminale selon la revendication 1, **caractérisé en ce que** la couche d'équilibrage est formée par une pâte ou un film de colle.

3. Ensemble à plaque terminale selon l'une des revendications précédentes, **caractérisé en ce que** la couche d'équilibrage est formée par une couche de silicone durcissante (8)

4. Ensemble à plaque terminale selon l'une des revendications précédentes, **caractérisé en ce que** la couche électriquement conductrice est formée par une feuille métallique de préférence revêtue en surface.

5. Ensemble à plaque terminale selon l'une des revendications précédentes, **caractérisé en ce que** la feuille métallique est pourvue au niveau du côté orienté vers la cellule d'une couche électriquement conductrice et résistante à la corrosion, de préférence composée d'or.

6. Ensemble à plaque terminale selon l'une des revendications précédentes, **caractérisé en ce que** la couche électriquement conductrice (6) présente une rallonge (7) traversant la plaque terminale (1) ou latérale, qui forme le raccord électrique de la cellule ou de la pile de cellules.

7. Ensemble à plaque terminale selon l'une des revendications précédentes, **caractérisé en ce que** la plaque terminale (1) présente une bordure entourant au moins la couche d'équilibrage (8).

8. Ensemble à plaque terminale selon l'une des revendications précédentes, **caractérisé en ce que** la plaque terminale (1) est conçue en tant que pièce moulée par injection de plastique et présente des évidements côté bord (2) pour la(les) tige(s) d'ancrage.

9. Ensemble à plaque terminale selon l'une des revendications précédentes, **caractérisé en ce que** la couche d'équilibrage (8) est délimitée latéralement par une garniture incorporée entre la plaque d'extrémité (1) et la couche électriquement conductrice (6).

10. Empilement de cellules comportant au moins deux cellules électrochimiques du type à membrane électrolyte polymère, qui est encastré entre deux plaques terminales et qui présente une couche d'équilibrage de pression, **caractérisé en ce que** la couche d'équilibrage de pression est disposée entre les cellules et est formée d'une matière coulante sous pression.
